(19) Europäisches Patentamt
European Patent Office
Office européen des brevets

(11) **EP 3 755 592 B1**

(12) **EUROPÄISCHE PATENTSCHRIFT**

(45) Veröffentlichungstag und Bekanntmachung des Hinweises auf die Patenterteilung:
**09.10.2024 Patentblatt 2024/41**

(21) Anmeldenummer: **19704213.8**

(22) Anmeldetag: **23.01.2019**

(51) Internationale Patentklassifikation (IPC):
*B60W 30/10* *(2006.01)*    *B60W 40/04* *(2006.01)*
*G08G 1/01* *(2006.01)*    *G08G 1/127* *(2006.01)*
*B60W 50/00* *(2006.01)*

(52) Gemeinsame Patentklassifikation (CPC):
**B60W 30/10; G05D 1/0217; G05D 1/0293; G08G 1/0112; G08G 1/0129; G08G 1/0145;** B60W 2050/0075; B60W 2554/00; B60W 2554/408; B60W 2555/20; B60W 2556/10; B60W 2556/45

(86) Internationale Anmeldenummer:
**PCT/EP2019/051669**

(87) Internationale Veröffentlichungsnummer:
**WO 2019/162027 (29.08.2019 Gazette 2019/35)**

(54) **SCHWARMBASIERTE TRAJEKTORIEN FÜR KRAFTFAHRZEUGE**

SWARM-BASED TRAJECTORIES FOR MOTOR VEHICLES

TRAJECTOIRES EN ESSAIM POUR VÉHICULES AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2018 DE 102018202712**

(43) Veröffentlichungstag der Anmeldung:
**30.12.2020 Patentblatt 2020/53**

(73) Patentinhaber: **VOLKSWAGEN AKTIENGESELLSCHAFT 38440 Wolfsburg (DE)**

(72) Erfinder:
• **MAX, Stephan**
 **38518 Gifhorn (DE)**
• **HAMEL, Sebastian**
 **38114 Braunschweig (DE)**
• **AMINEV, Timur**
 **38114 Braunschweig (DE)**

(56) Entgegenhaltungen:
WO-A1-2017/081035    DE-A1- 102013 019 112
US-A1- 2014 129 073    US-A1- 2017 287 335
US-B1- 9 079 587

EP 3 755 592 B1

**Beschreibung**

Die Erfindung betrifft ein Verfahren zur Erzeugung von Schwarmtrajektorien für Kraftfahrzeuge und deren Verwendung in einem Egofahrzeug.

Die Betrachtung des Straßenverkehrs als Schwarm von Kraftfahrzeugen ist in der Verkehrsforschung mittlerweile weit verbreitet. So wurde beispielsweise eine schwarmbasierte Simulation des Straßenverkehrs erfolgreich eingesetzt, um Ampelphasen an stark frequentierten Verkehrskreuzungen zu optimieren.

Werden nun die Trajektorien von einer Vielzahl von Fahrzeugen, also einem Fahrzeugschwarm, auf einem Fahrbahnabschnitt betrachtet, so stellt sich heraus, dass die Trajektorien der einzelnen Fahrzeuge auf dem Fahrbahnabschnitt üblicherweise unterschiedlich sind. Es ist daher möglich einen Durchschnittspfad für den betrachteten Fahrzeugschwarm zu definieren, der als Schwarmtrajektorie für den bestimmten Fahrbahnabschnitt bezeichnet wird.

Fährt beispielsweise ein Fahrzeug selbstständig auf einem Fahrbahnabschnitt, beispielsweise einer Autobahn, so ist die Trajektorie üblicherweise mittig zwischen den Markierungen angeordnet. Die gefahrenen Trajektorien für einen Fahrbahnabschnitt werden einem Backend-Rechner zugeführt, der aus einer Vielzahl von unterschiedlichen Fahrzeugen empfangenen Trajektorien eine Schwarmtrajektorie für den Fahrbahnabschnitt ermittelt. Die so ermittelte Schwarmtrajektorie für einen Fahrbahnabschnitt kann dann von einem weiteren Fahrzeug auf dem Fahrbahnabschnitt vom Backend-Rechner abgerufen werden, um die eigene Trajektorie mit der Schwarmtrajektorie zu vergleichen und gegebenenfalls anzupassen. Dies kann beispielsweise bei einem unterstützten Fahren bei Baustellen oder bei Bereichen ohne Markierungen hilfreich sein, um die eigene Trajektorie zu planen oder zu optimieren.

Die wie oben beschriebene Schwarmtrajektorie wird vom Backend-Rechner zeitunabhängig gespeichert und dem Nutzer für den angefragten Fahrbahnabschnitt zur Verfügung gestellt.

Allerdings ist in bestimmten Bereichen einer Fahrbahn, insbesondere im innerstädtischen Bereich, eine "ideale" Trajektorie von Randbedingungen abhängig, da eine ideale Trajektorie im hohen Maße vom Zustand des Verkehrs zu einer vorgegebenen Zeit auf dem betrachteten Fahrbahnbereich, von möglichen parkenden Fahrzeugen am Rand der Fahrbahn, usw. abhängt.

Daraus ergeben sich die folgenden Probleme. Wird die Schwarmtrajektorie in üblicher Weise gemittelt, so ergibt sich eine Mischung aus Trajektorien mit unterschiedlichen Randbedingungen. Das hat zur Konsequenz, dass die Schwarmtrajektorie im schlechtesten Fall keiner Randbedingung mehr ausreichend genügt.

Weiter erwartet der Fahrer eines Fahrzeugs eine den Randbedingungen angepasste Trajektorie. Daher, selbst wenn eine Trajektorie richtig zu einer Randbedingung eingefahren wird, so wird diese möglichweise bei einer anderen Randbedingung vom Fahrer als nicht ideal angesehen.

Die Druckschrift DE 10 2016 212 292 A1 betrifft ein Verfahren zum Bereitstellen einer Plantrajektorie für ein Kraftfahrzeug, umfassend die folgenden Schritte: Empfangen von bereitgestellten Umfelddaten eines Umfelds des Kraftfahrzeugs, Bereitstellen eines Zustandsraumes für einen vorgegebenen Planungshorizont, wobei der Zustandsraum mehrere Zustände des Kraftfahrzeugs in dem durch die Umfelddaten beschriebenen Umfeld umfasst, Auswählen einer Teilmenge der mehreren Zustände aus dem Zustandsraum auf Grundlage mindestens eines Auswahlkriteriums, Erstellen eines Suchgraphens, wobei die ausgewählten Zustände jeweils Knoten des Suchgraphen repräsentieren, Zerlegen des Suchgraphen in mindestens zwei zeitlich oder örtlich aufeinander folgende Teilbereiche, wobei nachfolgend sukzessiv für jeden der mindestens zwei zeitlich oder örtlich aufeinanderfolgenden Teilbereiche mehrere Trajektorienkandidaten parallel berechnet und anand mindestens eines Bewertungskriteriums in jedem der Teilbereiche bewertet werden, und im Anschluss: Zusammenstellen einer Plantrajektorie für den vorgegebenen Planungshorizont aus einzelnen berechneten Trajektorienkandidaten, wobei diejenigen über die Teilbereiche hinweg miteinander verbundenen Trajektorienkandidaten ausgewählt werden, deren Bewertungen in der Summe den höchsten Wert ergeben.

Die Druckschrift DE 10 2011 083 677 A1 schlägt ein Verfahren zur Prognose einer Verkehrssituation für ein Fahrzeug vor, bei dem anhand eines aktuellen Zustands des Fahrzeugs und anhand historischer Daten mindestens eine mögliche Zukunft für die Verkehrssituation des Fahrzeugs bestimmt wird.

Die Druckschrift WO 2017/081035 A1 betrifft ein Verfahren zum Bereitstellen einer Spurinformation einer Fahrspur eines Kraftfahrzeugs, bei welchem, während das Kraftfahrzeug auf der Fahrspur bewegt wird, eine Fahrtrajektorie des Kraftfahrzeugs bezüglich eines fahrzeugexternen Bezugsystems bestimmt wird, wobei die bestimmte Fahrtrajektorie an eine fahrzeugexterne zentrale Spurinformations-Sammeleinrichtung übermittelt wird, und die zumindest anhand der übermittelten Fahrtrajektorie bestimmte Spurinformation durch die Spurinformations-Sammeleinrichtung zumindest einem weiteren Kraftfahrzeug bereitgestellt wird.

Die Druckschrift USA 2017/0287335 A1 betrifft ein System und ein Verfahren zum Steuern eines Fahrzeugs. Dabei wird ein 3D-Modell einer Fahrzeugumgebung und des Fahrzeugs erstell; Pfadinformationen abgerufen, die einen geschätzten Standort eines Reisepfads bereitstellt; und einen Nachbarpfad für mindestens ein benachbartes Fahrzeug geschätzt.

Die Druckschrift DE 102013019 112 A1 betrifft ein Verfahren zum Betreiben eines Fahrerassistenzsystems für ein Kraftfahrzeug. Das Fahrerassistenzsystem umfasst eine Überwachungseinrichtung, die dazu ausgelegt ist, von einer Empfangseinheit Datenpakete mit Positionsdaten von auf einer Straße fahrenden Fremdfahrzeugen zu empfangen und auf der Grundlage der in den Datenpaketen enthaltenen Positionsdaten einen Spurverlauf für zumindest eine Fahrbahnspur der Straße zu ermitteln und anhand des Spurverlaufs zumindest eine geometrische Eigenschaft der Straße zu ermitteln und in Abhängigkeit von der zumindest einen ermittelten geometrischen Eigenschaft ein Steuersignal an zumindest ein für eine Unterstützung beim Führen des Kraftfahrzeugs bereitgestelltes Gerät des Kraftfahrzeugs auszugeben. Das Fahrerassistenzsystem kann in dem Kraftfahrzeug oder in einem Infrastrukturelement der Straße bereitgestellt sein.

Für aktuelle Überlegungen und beabsichtigten Anwendungen erfolgt die Ermittlung einer Schwarmtrajektorie für vorgegebene Straßenabschnitte statisch, so dass die Nutzung einer einmal ermittelten Schwarmtrajektorie unter Umständen zu unbefriedigenden Ergebnissen führt.

Der Erfindung liegt daher die Aufgabe zugrunde die Ermittlung von verbesserten Schwarmtrajektorien zu ermöglichen, so dass die Nutzung einer Schwarmtrajektorie in einem Egofahrzeug zu einem für den Fahrer befriedigenderem Fahrergebnis führt.

Diese Aufgabe wird durch ein Verfahren zur Ermittlung einer Schwarmtrajektorie für einen Straßenabschnitt mit den Merkmalen des Anspruchs 1 sowie durch ein Verfahren zur Verwendung einer für den Fahrbahnabschnitt ermittelten Schwarmtrajektorie mit den Merkmalen des Anspruchs 5 gelöst. Bevorzugte Ausführungsformen der Erfindung sind Gegenstand der Unteransprüche.

Bei dem erfindungsgemäßen Verfahren zur Erzeugung von Schwarmtrajektorien für eine vorgegebene Fahrspur eines Fahrbahnabschnitts,

- übermitteln eine Vielzahl von die vorgegebene Fahrspur befahrenden Fahrzeugen ihre jeweilige Fahrtrajektorien an einen Backend-Rechner,
- ermitteln die Fahrzeuge vorgegebene Randbedingungen während der Befahrung der Fahrspur und übertragen die ermittelten Randbedingungen zusammen mit der jeweiligen Trajektorie an den Backend-Rechner, und
- erzeugt der Backend-Rechner aus den übermittelten Trajektorien und dazugehörigen Randbedingungen eine oder mehrere Schwarmtrajektorien (ST) für die vorgegebene Fahrspur (FS) als Funktion zumindest einer Randbedingung und speichert diese ab, wobei
- zumindest die Befahrungszeit als Randbedingung den zu übermittelnden Trajektorien zugefügt wird, wobei die Befahrungszeit durch ein Befahrungszeitintervall realisiert ist.

Durch die Bestimmung der bei der Befahrung der Fahrspur herrschenden Randbedingungen parallel zur Trajektorie können randbedingungsspezifische Schwarmtrajektorien ermittelt und abgespeichert werden, so dass diese randbedingungsspezifischen Schwarmtrajektorien anderen Fahrern der entsprechenden Fahrspur zur Verfügung gestellt werden können. Dabei ist Befahrungszeit sozusagen die Grundrandbedingung, die immer bestimmt und übermittelt wird. Dem liegt die Überlegung zugrunde, dass manche Verkehrssituationen, wie insbesondere die Verkehrsdichte auf einer Fahrspur eines vorgegebenen Fahrbahnabschnitts, in den meisten Fällen von der Befahrungszeit abhängig sind.

Vorzugsweise werden die aus den Trajektorien in Verbindung mit den Randbedingungen erzeugten Schwarmtrajektorien in einer Datenbank abgespeichert, wobei Schwarmtrajektorien für vorgegebene Randbedingungen und/oder mögliche Kombinationen von vorgegebenen Randbedingungen für die vorgegebene Fahrspur ermittelt werden. Weiter vorzugsweise können das Befahrungsdatum, der Wochentag, das Wetter, die Verkehrssituation, die Parksituation am Rand der Fahrspur, der Fahrbahnzustand und/oder die Lichtsituation bezüglich der vorgegebenen Fahrspur weitere Randbedingungen definiert sein und den jeweiligen zu übermittelnden Trajektorien zugefügt werden. Die Aufzählung der möglichen Randbedingungen ist nicht als abschließend zu verstehen.

Weiter bevorzugt können bei der Erstellung der randbedingungsspezifischen Schwarmtrajektorien die Randbedingungen unterschiedlich gewichtet werden. Dies kann insbesondere dann von Bedeutung sein, wenn die Schwarmtrajektorie eine Funktion einer Kombination von Randbedingungen ist, beispielsweise den Randbedingungen Datum, Wochentag, Befahrungszeit und Parksituation. Entspricht das Datum einem Feiertag, so könnte die Randbedingung Wochentag eine geringere Bedeutung haben.

Das erfindungsgemäße Verfahren zur Verwendung einer Schwarmtrajektorie in einem Egofahrzeug, wobei Ermittlung der Schwarmtrajektorie gemäß dem im Vorangegangenen beschriebenen Verfahrens erfolgt, umfasst die Schritte:

- Befahren der vorgegeben Fahrspur durch das Egofahrzeug,
- Ermitteln vorgegebener Randbedingungen seitens des Egofahrzeugs während der Befahrung der vorgegebenen Fahrspur, wobei zumindest die Befahrungszeit eine Randbedingung bildet, die durch ein Befahrungszeitintervall realisiert ist,
- Übermitteln der ermittelten Randbedingungen an einen Backend-Rechner, der eine Datenbank mit Schwarmtrajektorien für die aktuell befahrene Fahrspur umfasst, zum Auffinden zumindest einer die übermittelten Randbedingungen betreffenden Schwarmtrajektorie,

- Senden der zumindest einen aufgefundenen Schwarmtrajektorie für die vorgegebene Fahrspur an das Egofahrzeug, und
- Vergleichen der aktuellen Fahrtrajektorie mit der Schwarmtrajektorie.

Vorzugsweise legt das Egofahrzeug fest, für welche Randbedingung oder Kombination von Randbedingungen die Schwarmtrajektorie in der Datenbank ermittelt wird. Dies kann beispielsweise dadurch erfolgen, dass nur ausgesuchte Randbedingungen an den Backend-Rechner übermittelt werden, so dass dieser auch nur für die übermittelten Randbedingungen eine Datenbanksuche durchführen kann. Es ist auch denkbar, dass mehrere Schwarmtrajektorien entsprechend der Anzahl der Randbedingungen und/oder der gewünschten Kombinationen von Randbedingungen an das Egofahrzeug übermittelt werden.

Vorzugsweise wird die aktuelle Fahrtrajektorie des Egofahrzeugs durch die übermittelte Schwarmtrajektorie korrigiert oder beeinflusst, beispielsweise indem die Differenz zwischen der aktuellen Fahrtrajektorie und der Schwarmtrajektorie bestimmt und die Differenz zum Nachregeln der aktuellen Trajektorie des Egofahrzeugs verwendet wird.

Eine bevorzugte Ausführungsform der Erfindung wird nachfolgend anhand der Zeichnungen erläutert, dabei zeigt

Fig. 1 das Verfahren zur Ermittlung von Schwarmtrajektorien in schematischer Darstellung, und

Fig. 2 die Verwendung einer so ermittelten Schwarmtrajektorie in einem Kraftfahrzeug in schematischer Darstellung.

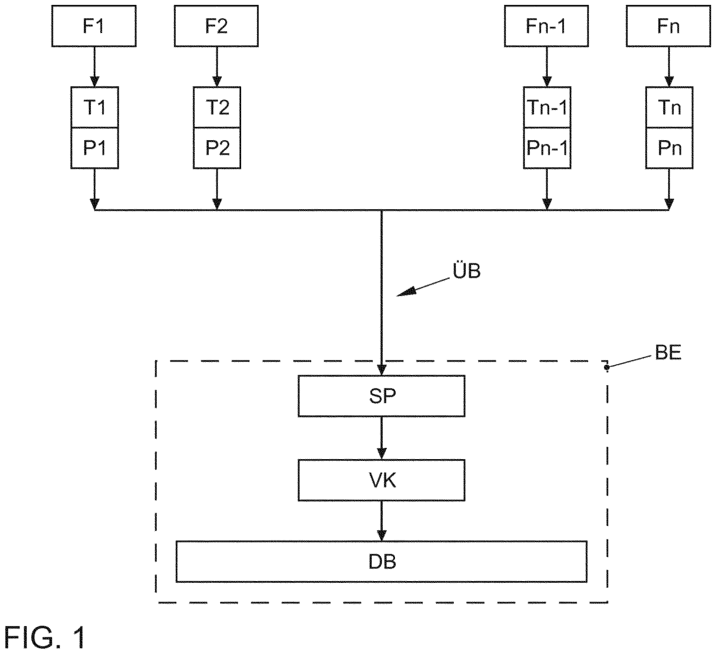

Fig. 1 zeigt in schematischer Darstellung die Ermittlung von randbedingungsabhängigen Schwarmtrajektorien für einen Fahrbahn- bzw. Streckenabschnitt, wobei im erläuternde Beispiel ein fester Streckenabschnitt vorgegebenen ist. Für weitere Streckenabschnitte ist das Verfahren entsprechend zu erweitern und der jeweilige Streckenabschnitt geht als Parameter in die Betrachtung ein.

Eine Vielzahl von Fahrzeugen F1, F2, ..., Fn-1, Fn befährt einen vorgegebenen Streckenabschnitt, wodurch jedes der Fahrzeuge F1, F2, ..., Fn-1 und Fn auf dem Streckenabschnitt eine individuelle Trajektorie T1, T2, ..., Tn-1 und Tn erzeugt. Durch geeignete, im Fahrzeug F1, F2, ..., Fn-1, Fn angeordnete Einrichtungen werden individuelle Randbedingungen als Parametersätze P1, P2, ..., Pn-1, Pn jeder Trajektorie T1, T2, ..., Tn-1, Tn des betrachteten Streckenabschnitts zugeordnet, wobei jeder Trajektorie T1, T2, ..., Tn-1 und Tn zumindest der Parameter Zeit der Befahrung des vorgegebenen Streckenabschnitts zugeordnet ist. Neben der genannten Befahrungszeit kommen als Randbedingungen oder Parameter die jeweilige Verkehrssituation, die Parksituation am Rand des Streckenabschnitts, das aktuelle Wettersituation, und/oder die Lichtsituation in Betracht, die über entsprechende Einrichtungen zur Beobachtung des Umfelds ermittelbar sind. Die Randbedingungen werden dann zu einem jeweiligen Parametersatz P1, P2, ..., Pn-1, Pn zusammengefasst.

Formal betrachtet existiert eine vorgegebene Menge von Randbedingungen Rk, wobei der Index k die Werte 1 bis m annehmen kann, also $k \in \{1, ..., m\}$, aus denen die Parametersätze P1 bis Pn der Trajektorien T1 bis Tn gebildet werden. Folglich kann ein Parametersatz Pi, mit $i \in (1, .., n)$. geschrieben werden als folgendes Tupel:

E

$$Pi \subseteq \{Rj \mid j \in 1, ..., k\}$$

Mit anderen Worten, es existiert eine endliche Menge von Randbedingungen Rj, $j \in \{1, ... k\}$ und der Parametersatz Pi umfasst eine Teilmenge von Randbedingungen Rj aus der Menge aller Teilmengen, also der Potenzmenge der Menge aller Randbedingungen Rj.

Im konkreten Anwendungsfall könnten die Randbedingungen Rj wie folgt definiert sein:

R1: Datum und Wochentag Mo bis So,

R2: Uhrzeit in Zeitintervallen, beispielsweise in Stunden,

R3: Wetter, beispielsweise Sonnig, Trocken, Nieselregen, Regen, Schnee, Nebel, Frost,

R4: Parksituation am rechten Fahrbahnrand mit den Werten leer, mittel, voll,

R5: Verkehrssituation mit den Werten wenig, mittel, stark, stauend.

In dem Beispiel mit den genannten fünf Randbedingungen R1 bis R5 würde zur Trajektorie Ti der Parametersatz Pi gehören, wobei der Parametersatz Pi die Randbedingungen R1 bis R5 umfasst, also das nachfolgende Tupel bildet:

$$Pi =( R1, R2, R3, R4, R5),$$

mit beispielsweise

R1 = (Wochentag: Montag)
R2 = (Zeitintervall: 14:00 bis 15:00)
R3 = (Wetter: Sonnig und Trocken),
R4 = (Parksituation rechter Straßenrand: leer), und
R5 = (Verkehr: wenig).

Die oben genannten Randbedingungen R1 bis R5 und deren Werte sind nur beispielhaft zu verstehen und dienen zur Erläuterung. Im konkreten Fall sind die Randbedingen und deren Spezifikationen detailliert an die Anwendung angepasst.

Die Trajektorien T1 bis Tn einschließlich der dazugehörigen Parametersätze P1 bis Pn jedes Fahrzeugs F1 bis Fn werden unabhängig voneinander über eine Übertragungsstrecke ÜB, beispielsweise eine Funkverbindung wie Mobilfunk, an einen Backend-Rechner BE insbesondere drahtlos übermittelt. Die Informationen können auch in den "Testfahrzeugen" F1 bis Fn abgespeichert werden und nach Beendigung der Fahrt auf der vorgegebenen Strecke auf eine beliebige Weise an den Backend-Rechner BE übertragen werden.

In einem Speicher SP des Backend-Rechners BE werden die drahtlos übertragenen Informationstupel (Ti, Pi) bestehend aus der Trajektorie Ti des Fahrzeugs Fi und dem dazugehörigen Parametzersatz Pi BE zur weiteren Verarbeitung und Zusammenfassung gespeichert.

In einer Einrichtung VK zur Verarbeitung und Korrelation der gespeicherten Informationstupel (Ti, Pi) werden die Trajektorien Ti unter Berücksichtigung ihrer zugehörigen Parameter Pi miteinander entsprechend ihrer Korrelation zu entsprechenden Schwarmtrajektorien ST verknüpft. Mit anderen Worten, für bestimmte Kombinationen von Randbedingungen Rj, also für bestimmte Parametersätze, wird eine Schwarmtrajektorie ST beispielsweise als Mittelwert der für diesen Parametersatz ermittelten Trajektorien Ti ermittelt.

Angenommen, es wurden für einen betrachteten Fahrbahnabschnitt im Messzeitraum insgesamt eine Anzahl von m Trajektorien Tm, $m \in \{1, ... , n\}$, für einen vorgegebenen Parametersatz $Pi \subseteq \{Rj \mid j \; e \; 1, ..., k\}$ ermittelt, so es gibt m Informationstupel (Tm, Pi). Folglich können die m Trajektorien quasi als eine Funktion des betrachteten Parametersatzes Pi betrachtet werden, also Tm(Pi) und es ergibt sich unter Verwendung einer einfachen Mittelwertbildung die Schwarmtrajektorie ST(Pi) als Funktion der m Informationstupel:

$$ST(Pi) = \left.\sum_{1}^{m} Ti(Pi)\right/ m \, ,$$

wobei der Parametersatz Pi beispielsweise wie das obige Beispiel aussehen könnte. Mit anderen Worten, es gibt eine Schwarmtrajektorie ST(Pi) für die Parameterwerte Pi:

R1 = (Wochentag: Montag)
R2 = (Zeitintervall: 14:00 bis 15:00)
R3 = (Wetter: Sonnig und Trocken),
R4 = (Parksituation rechter Straßenrand: leer), und
R5 = (Verkehr: wenig).

Ferner ist die Mittelwertbildung hier nur beispielhaft zu verstehen. Andere Wege und Verfahren zur Zusammenführung und Korrelation der ermittelten Trajektorien für eine Kombination von Randbedingungen sind denkbar.

Die sich aus den Korrelationen ergebenden Schwarmtrajektorien ST(Pi) für einen vorgegebenen Parametersatz Pi und dem betrachteten Fahrbahnabschnitt werden dann in einer Wissensdatenbank DB abgelegt, um einen Abruf von externer Seite zu ermöglichen.

Es können also nicht nur Schwarmtrajektorien für einen sozusagen "vollständigen" Parametersatz Pi(R1, ... Rm) erzeugt werden, der alle Randbedingungen umfasst, sondern es werden auch Schwarmtrajektorien für einzelne Randbedingungen Ri, $i \in \{1, ..., m\}$ und für gewünschte Kombinationen von Randbedingungen, beispielsweise Ri,j mit $i, j \in \{1, ..., m\}$, wobei die Kombinationen alle Teilmengen der Menge aller Randbedingungen Ri, $i \in \{1, ..., m\}$ umfasst.

Auf diese Weise ist es ferner möglich weitere Schwarmtrajektorien ST(Ri, .., Rj) zu bestimmen und im Backend-Rechner BE abzulegen, die beispielsweise den Bedingungen genügt R1 = "Dienstag" und R2 = "14:00h - 15:00h" oder R1 = "Dienstag", R2 = "14:00h - 15:00h" und R4 = "leer". Auf diese Weise erhält der Nutzer die Auskunft darüber, wie die Schwarmtrajektorie für den genannten Wochentag und das gewünschte Zeitintervall oder für den Wochentag R1, Zeitintervall R2 und Parksituation R4 aussieht, ohne dass weitere Nebenbedingungen wie Wetter R3, Parksituation R4 und Verkehr R5 im ersten Beispiel bzw. Wetter R3 und Verkehr R5 im zweiten Beispiel berücksichtigt werden.

Wichtig hierbei ist es weiter, hier auch regionsspezifische Effekte zu berücksichtigen. So reagieren beispielsweise Fahrer unterschiedlich auf Randbedingungen im Verkehr bzw. Nutzen mögliche Freiheitsgrade deutlicher oder weniger deutlich aus. Ferner kennt die Wissensdatenbank DB zum einen die Schwarmtrajektorien zu den unterschiedlichen Randbedingungskombinationen, als auch die Historie die unterschiedlichen Randbedingungen an den entsprechenden Straßenabschnitten.

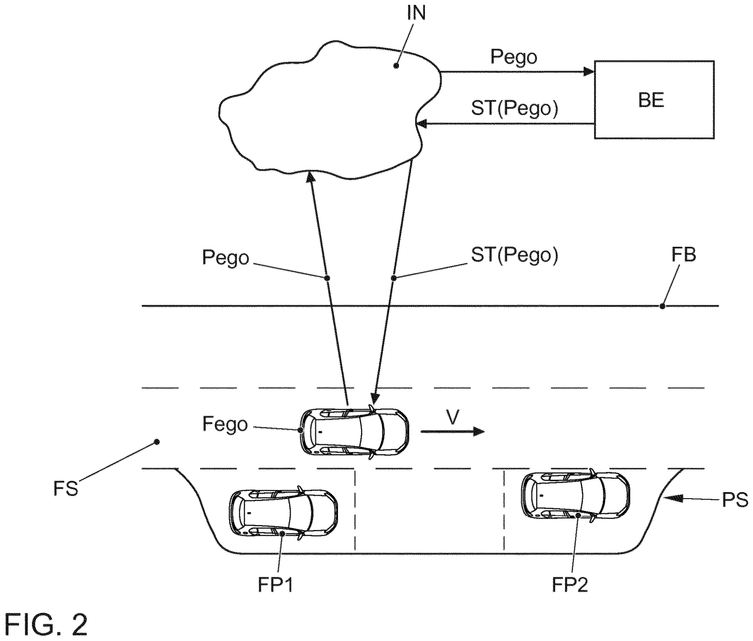

Fig. 2 zeigt die Verwendung eine Schwarmtrajektorie in einem Egofahrzeug, welches einen bestimmten Streckenabschnitt befährt, in schematischer Darstellung. Ein Egofahrzeug Fego befährt beispielsweise auf einer Fahrspur FS einer innerstädtischen Fahrbahn entlang einer rechts der Fahrspur FS angeordneten Parkspur PS mit einer Geschwindigkeit v. Die Parkspur PS ist dabei teilweise belegt, und zwar hier in der Fig. 2 mit zwei parkenden Fahrzeugen FP1 und FP2, wobei das zweite parkende Fahrzeug FP2 in seiner Parklücke stark an die Fahrspur FS angrenzt. Daher ist zu erwarten, dass die Trajektorie des Egofahrzeugs Fego beim Passieren des zweiten parkenden Fahrzeugs FP2 nicht mittig in der Fahrspur FS verläuft, sondern aufgrund des zweiten parkenden Fahrzeugs FP2 in Fahrtrichtung nach links zur Mitte der Fahrbahn FB hin verlaufen wird.

Das Egofahrzeug Fego misst mit seiner Sensorik (nicht dargestellt) die für ihn notwendigen Randbedingungen, beispielsweise die oben genannten Randbedingungen R1 bis R5 für den Fahrbahnabschnitt FB, auf dem sich das Egofahrzeug Fego aktuell befindet, die zu einem Parametersatz Pego zusammengefasst werden. Dieser Parametersatz Pego wird per Mobilfunk über das schematisch dargestellte Internet IN an den zuständigen Backend-Rechner BE übertragen. Der Backend-Rechner BE ermittelt in seiner Datenbank anhand des übermittelten Parametersatzes Pego eine entsprechende Schwarmtrajektorie ST(Pego), die dann über das Internet mit der entsprechenden Mobilfunkverbindung an das Egofahrzeug Fego übermittelt wird, in welchem diese Schwarmtrajektorie ST(Pego) zur Planung und/oder Korrektur der eigenen Fahrtrajektorie eingesetzt wird.

## Bezugszeichenliste

| | |
|---|---|
| F1 | Fahrzeug 1 |
| F2 | Fahrzeug 2 |
| Fi | Fahrzeug i |
| Fn-1 | Fahrzeug n-1 |
| Fn | Fahrzeug n |
| T1 | Trajektorie der Fahrzeugs 1 |
| T2 | Trajektorie der Fahrzeugs 2 |
| Tn-1 | Trajektorie der Fahrzeugs n-1 |
| Tn | Trajektorie der Fahrzeugs n |
| P1 | Parametersatz zur Trajektorie T1 |
| P2 | Parametersatz zur Trajektorie T2 |
| Pn-1 | Parametersatz zur Trajektorie Tn-1 |
| Pn | Parametersatz zur Trajektorie Tn |
| ÜB | Übertragung |
| BE | Backend-Rechner |
| SP | Speicherung |
| VK | Verarbeitung und Korrelation |
| DB | Datenbank |
| | |
| Fego | Egofahrzeug |
| FP1 | erstes parkendes Fahrzeug |
| FP2 | zweites parkende Fahrzeug |
| PS | Parkspur |
| FB | Fahrbahn |
| FS | Fahrspur |
| Pego | Parametersatz |
| ST | Schwarmtrajektorie |
| IN | Internet |
| v | Geschwindigkeit |

**Patentansprüche**

1. Verfahren zur Erzeugung von Schwarmtrajektorien für eine vorgegebene Fahrspur (FS) eines Fahrbahnabschnitts, wobei

    - eine Vielzahl von die vorgegebene Fahrspur befahrenden Fahrzeugen (F1, ..., Fn) ihre jeweilige Fahrtrajektorien (T1, ... Tn) an einen Backend-Rechner (BE) übermitteln,
    - die Fahrzeuge (F1, ..., Fn) vorgegebene Randbedingungen während der Befahrung der Fahrspur (FS) ermitteln und die ermittelten Randbedingungen zusammen mit der jeweiligen Trajektorie (T1, ..., Tn) an den Backend-Rechner (BE) übertragen,
    - der Backend-Rechner (BE) aus den übermittelten Trajektorien (T1, ... Tn) und dazugehörigen Randbedingungen eine oder mehrere Schwarmtrajektorien (ST) für die vorgegebene Fahrspur (FS) als Funktion zumindest einer Randbedingung erzeugt und abspeichert, und
    - zumindest die Befahrungszeit als Randbedingung den zu übermittelnden Trajektorien (T1, .., Tn) zugefügt wird, wobei die Befahrungszeit durch ein Befahrungszeitintervall realisiert ist.

2. Verfahren nach Anspruch 1, **dadurch gekennzeichnet, dass** die erzeugten Schwarmtrajektorien in einer Datenbank (DB) abgespeichert werden, wobei Schwarmtrajektorien für vorgegebene Randbedingungen und/oder mögliche Kombinationen von vorgegebenen Randbedingungen für die vorgegebene Fahrspur (FS) ermittelt werden.

3. Verfahren nach Anspruch 1 oder 2, **dadurch gekennzeichnet, dass** das Befahrungsdatum, der Wochentag, das Wetter, die Verkehrssituation, die Parksituation, der Fahrbahnzustand und/oder die Lichtsituation bezüglich der vorgegebenen Fahrspur (FS) als weitere Randbedingungen bestimmt und den jeweiligen Trajektorien (T1, ... Tn) zugefügt werden.

4. Verfahren nach einem der vorangegangenen Ansprüche, **dadurch gekennzeichnet, dass** bei der Erstellung der Schwarmtrajektorien die Randbedingungen unterschiedlich gewichtet werden.

5. Verfahren zur Verwendung einer Schwarmtrajektorie (ST) in einem Egofahrzeug (Fego), wobei die Ermittlung der Schwarmtrajektorie mittels des Verfahrens nach einem der vorangegangenen Ansprüche erfolgt, umfassend die Schritte:

    - Befahren der vorgegeben Fahrspur (FS) durch das Egofahrzeug (Fego),
    - Ermitteln vorgegebener Randbedingungen (Pego) seitens des Egofahrzeugs (Fego) während der Befahrung der vorgegebenen Fahrspur (FS), wobei zumindest die durch ein Befahrungszeitintervall realisierte Befahrungszeit eine Randbedingung darstellt,
    - Übermitteln der ermittelten Randbedingungen (Pego) an einen Backend-Rechner (BE), der eine Datenbank (DB) mit Schwarmtrajektorien für die aktuell befahrene Fahrspur (FS) umfasst, zum Auffinden zumindest einer die übermittelten Randbedingungen betreffenden Schwarmtrajektorie (ST(Pego)),
    - Senden der aufgefundenen Schwarmtrajektorie (ST(Pego))für die vorgegebene Fahrspur (FS) an das Egofahrzeug (Fego), und
    - Vergleichen der aktuellen Fahrtrajektorie mit der Schwarmtrajektorie (ST(Pego)).

6. Verfahren nach Anspruch 5, **dadurch gekennzeichnet, dass** das Egofahrzeug (Fego) festlegt, für welche Randbedingung (Pego) oder Kombination von Randbedingungen (Pego) die Schwarmtrajektorie (ST(Pego)) in der Datenbank (DB) ermittelt wird.

7. Verfahren nach einem der Ansprüche 5 oder 6, **dadurch gekennzeichnet, dass** die aktuelle Fahrtrajektorie des Egofahrzeugs (Fego) durch die übermittelte Schwarmtrajektorie (ST(Pego)) korrigiert oder beeinflusst wird.

8. Verfahren nach Anspruch 7, **dadurch gekennzeichnet, dass** die Differenz zwischen der aktuellen Fahrtrajektorie und der Schwarmtrajektorie (ST(Pego)) bestimmt wird und die Differenz zum Nachregeln der aktuellen Trajektorie verwendet wird.

**Claims**

1. Method for generating swarm trajectories for a given lane (FS) of a road section, wherein

- a plurality of vehicles (F1, ... Fn) driving in the given lane transmit their respective driving trajectories (T1, ... Tn) to a backend computer (BE),
- the vehicles (F1, ... Fn) determine given boundary conditions while driving in the lane (FS) and transfer the determined boundary conditions together with the respective trajectory (T1, ... Tn) to the backend computer (BE),
- the backend computer (BE) generates and stores, from the transmitted trajectories (T1, ... Tn) and associated boundary conditions, one or more swarm trajectories (ST) for the given lane (FS) as a function of at least one boundary condition, and
- at least the travel time is added as a boundary condition to the trajectories (T1, ... Tn) to be transmitted, wherein the travel time is realized over a travel time interval.

2. Method according to claim 1, **characterized in that** the generated swarm trajectories are stored in a database (DB), wherein swarm trajectories for given boundary conditions and/or possible combinations of given boundary conditions for the given lane (FS) are determined.

3. Method according to claim 1 or 2, **characterized in that** the date of travel, the day of the week, the weather, the traffic situation, the parking situation, the road condition and/or the lighting situation with regard to the given lane (FS) are defined as further boundary conditions and added to the respective trajectories (T1, ... Tn).

4. Method according to any one of the preceding claims, **characterized in that** when creating the swarm trajectories, the boundary conditions are weighted differently.

5. Method for using a swarm trajectory (ST) in an ego vehicle (Fego), wherein the determination of the swarm trajectory is carried out by means of the method according to any one of the preceding claims, comprising the steps of:

- driving in the given lane (FS) by the ego vehicle (Fego),
- determining given boundary conditions (Pego) on the part of the ego vehicle (Fego) while driving in the given lane (FS), wherein at least the travel time realized over a travel time interval is a boundary condition,
- transmitting the determined boundary conditions (Pego) to a backend computer (BE) which comprises a database (DB) with swarm trajectories for the currently driven lane (FS) in order to find at least one swarm trajectory (ST(Pego)) that matches the transmitted boundary conditions,
- transmitting the found swarm trajectory (ST(Pego)) for the given lane (FS) to the ego vehicle (Fego), and
- comparing the current driving trajectory with the swarm trajectory (ST(Pego)).

6. Method according to claim 5, **characterized in that** the ego vehicle (Fego) establishes which boundary condition (Pego) or combination of boundary conditions (Pego) are used for determining the swarm trajectory (ST(Pego)) in the database (DB).

7. Method according to any one of claims 5 or 6, **characterized in that** the current driving trajectory for the ego vehicle (Fego) is corrected or affected by the transmitted swarm trajectory (ST(Pego)).

8. Method according to claim 7, **characterized in that** the difference between the current driving trajectory and the swarm trajectory (ST(Pego)) is determined and the difference is used to correct the current trajectory.

**Revendications**

1. Procédé permettant la génération de trajectoires en essaim pour une voie de circulation (FS) prédéfinie d'un tronçon de chaussée, dans lequel

- une pluralité de véhicules (F1, ..., Fn) circulant sur la voie de circulation prédéfinie transmettent leurs trajectoires de circulation (T1, ..., Tn) respectives à un calculateur dorsal (BE),
- les véhicules (F1, ..., Fn) déterminent des conditions marginales prédéfinies pendant la circulation sur la voie de circulation (FS) et transmettent les conditions marginales déterminées conjointement avec la trajectoire (T1, ..., Tn) respective au calculateur dorsal (BE),
- le calculateur dorsal (BE) génère et mémorise, à partir des trajectoires (T1, ... Tn) transmises et des conditions marginales correspondantes, une ou plusieurs trajectoires en essaim (ST) pour la voie de circulation (FS) prédéfinie en tant que fonction d'au moins une condition marginale, et
- au moins le temps de circulation est ajouté en tant que condition marginale aux trajectoires (T1, ..., Tn) à transmettre, dans lequel le temps de circulation est réalisé par un intervalle de temps de circulation.

2. Procédé selon la revendication 1, **caractérisé en ce que** les trajectoires en essaim générées sont mémorisées dans une base de données (DB), dans lequel les trajectoires en essaim sont déterminées pour des conditions marginales prédéfinies et/ou pour des combinaisons possibles de conditions marginales prédéfinies pour la voie de circulation (FS) prédéfinie.

3. Procédé selon la revendication 1 ou 2, **caractérisé en ce que** la date de circulation, le jour de la semaine, la météo, la situation du trafic, la situation de stationnement, l'état de la chaussée et/ou la situation d'éclairage par rapport à la voie de circulation (FS) prédéfinie sont déterminés en tant que conditions marginales supplémentaires et sont ajoutés aux trajectoires (T1, ... Tn) respectives.

4. Procédé selon l'une des revendications précédentes,
**caractérisé en ce que,** lors de la création des trajectoires en essaim, les conditions marginales sont pondérées différemment.

5. Procédé permettant l'utilisation d'une trajectoire en essaim (ST) dans un égo-véhicule (Fego), dans lequel la détermination de la trajectoire en essaim est effectuée au moyen du procédé selon l'une des revendications précédentes, comprenant les étapes consistant à :

   - circuler sur la voie de circulation (FS) prédéfinie par l'égo-véhicule (Fego),
   - déterminer des conditions marginales (Pego) prédéfinies du côté de l'égo-véhicule (Fego) pendant la circulation sur la voie de circulation (FS) prédéfinie, dans lequel au moins le temps de circulation réalisé par un intervalle de temps de circulation représente une condition marginale,
   - transmettre les conditions marginales (Pego) déterminées à un calculateur dorsal (BE), lequel comprend une base de données (DB) comportant des trajectoires en essaim pour la voie de circulation (FS) actuellement empruntée pour circuler, pour le repérage d'au moins une trajectoire en essaim (ST(Pego)) concernant les conditions marginales transmises,
   - envoyer la trajectoire en essaim (ST(Pego)) repérée pour la voie de circulation (FS) prédéfinie à l'égo-véhicule (Fego), et
   - comparer la trajectoire de circulation actuelle avec la trajectoire en essaim (ST(Pego)).

6. Procédé selon la revendication 5, **caractérisé en ce que** l'égo-véhicule (Fego) établit pour quelle condition marginale (Pego) ou combinaison de conditions marginales (Pego) la trajectoire en essaim (ST(Pego)) est déterminée dans la base de données (DB).

7. Procédé selon l'une des revendications 5 ou 6, **caractérisé en ce que** la trajectoire de circulation actuelle de l'égo-véhicule (Fego) est corrigée ou influencée par la trajectoire en essaim (ST(Pego)) transmise.

8. Procédé selon la revendication 7, **caractérisé en ce que** la différence entre la trajectoire de circulation actuelle et la trajectoire en essaim (ST(Pego)) est évaluée et la différence est utilisée pour le nouveau réglage de la trajectoire actuelle.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016212292 A1
- DE 102011083677 A1
- WO 2017081035 A1
- US 20170287335 A1
- DE 102013019112 A1